# EUROPEAN PATENT SPECIFICATION

(11) **EP 1 046 494 B1**
(45) Date of publication and mention of the grant of the patent: **26.04.2006**
(21) Application number: 99900285.0
(22) Date of filing: 06.01.1999
(51) Int. Cl.: B32B 27/42, B32B 5/24, D04H 13/00, E04C 2/296, E04C 2/20, E04C 2/24

(54) **LAMINATE OF PHENOLIC RESIN FOAM**
LAMINAT AUS PHENOLHARZSCHAUMSTOFF
STRATIFIE EN MOUSSE DE RESINE PHENOLIQUE

(30) Priority: 07.01.1998 JP 174498
(43) Date of publication of application: 25.10.2000
(73) Proprietor: Asahi Kasei Kabushiki Kaisha, Osaka-shi, Osaka 530-8205 (JP)
(72) Inventor: WATANABE, Takayasu, Iwaki-shi Fukushima 971-8101 (JP)
(74) Representative: Strehl Schübel-Hopf & Partner
(86) International application number: PCT/JP1999/000024
(87) International publication number: WO 1999/034975

(56) References cited:
- FR-A- 2 391 334
- JP-A- 6 087 181
- JP-A- 60 210 413
- JP-U- 58 038 433
- JP-U- 60 004 107
- US-A- 4 585 683

## Description

### Technical Field

The present invention relates to a production process for a laminate of a phenolic resin foam. In particular, the present invention relates to a production process for a laminate of a phenolic resin foam which has, on at least one side thereof, a nonwoven fabric of synthetic fibers adhered substantially without an adhesive layer, and is reduced in oozing of the phenolic resin to the outside surface and in discoloration-induced spots, excellent in the adhesion strength of the face material and useful as a thermal insulating plate in building.

### Background Art

A laminate of a phenolic resin foam obtained by adhering a face material such as kraft paper or nonwoven fabric of glass fibers to at least one side of a phenolic resin foam serving as a core material is known ("Phenolic resin foam", Kogyo Zairyo, **33**(7), 75-80(1985); "Recent trend in chemistry and technique of phenolic foam", Plastics, **38**(2), 50-59(1987)).

The face material used for a laminate of a phenolic resin foam plays a role of covering therewith the phenolic resin foam which is a relatively fragile material, thereby protecting it from scratches or breakage by external force.

As a common process for continuously producing a laminate of a phenolic resin foam, known is, for example, a process comprising continuously discharging an expandable phenolic resin mixture onto a back surface material which is running, covering the thus discharged mixture with a front surface material to form a continuous laminate, allowing the resulting continuous laminate to pass through double conveyers set at a predetermined temperature in the sandwiched form and then expanding and curing it.

The face materials in the above-described production process play roles of a support (back surface material) and a cover (front surface material) for the uncured expandable phenolic resin mixture and permit the continuous transfer of the mixture to double conveyers, whereby continuous production can be conducted.

Another role of the face materials is to make it possible to impart a foam laminate with a hinge structure in the so-called "split liner technique" wherein a composite comprising a foam, and a face material and a sheet adhered to the front surface and back surface of the foam, respectively, as described in the microfilm of JP-U-A-1-60-4107 (The term "JP-U-A" used herein means a "unexamined published Japanese utility model application") is notched from the front surface toward, but not through, the back surface and then, inserted under pressure between supporting frames disposed at a distance narrower than the widthwise size of the laminate.

A paper face material such as kraft paper which has been most frequently employed so far is accompanied with the problem that owing to insufficient adhesion with a phenolic resin foam, the face material tends to peel during the handling of the laminate. Particularly in the case where a rigid foam such as phenol is employed as a core material in the above-described "split liner technique", a notch is made over the whole cross-section of the foam portion in order to actualize a hinge structure and the hinge portion is substantially formed only by the face material so that the face material tends to peel at this portion, thus causing a problem. The paper face material is accompanied with another problem that owing to poor water resistance, the face material peels owing to rain when the laminate is used or stored outside or dew condensation on the laminate under some using conditions.

The use of a nonwoven fabric of glass fibers or an inorganic fiber cloth as a face material is accompanied with a drawback that it has low tear strength and tends to be torn easily in spite of relatively high adhesion strength with a phenolic resin foam. Particularly when the split liner technique" is employed, tearing troubles tend to occur at a hinge structure portion. In addition, the use of a nonwoven fabric of glass fibers or an inorganic fiber cloth as a face material causes a trouble in handling properties upon use of the resulting laminate.

FR-A-2 391 334 discloses a laminate of a phenolic resin foam with a nonwoven fabric of synthetic fibers, which is produced by a casting or injection type frame molding process.

An object of the present invention is therefore to provide a laminate of a phenolic resin foam which can overcome the above-described troubles, is reduced in oozing of the phenolic resin to the outside surface and in discoloration-induced spots of the laminate, is excellent in product quality and adhesion strength of the face material and, different from the conventional technique, permits the use of an economic nonwoven fabric of synthetic fibers having a low basis weight; and to provide a production process and a construction method thereof.

### Disclosure of the Invention

With a view to attaining the above-described object, the present inventors have carried out extensive investigations and completed the present invention. That is, the present invention is as follows.
(1) A process for producing a laminate of a phenolic resin foam, which comprises continuously discharging an expandable resin composition comprising a phenolic resin, a surfactant, a foaming agent and a catalyst onto a running face material, covering the resulting composition with a face material, and expanding and curing the composition, wherein a nonwoven fabric of synthetic fibers having a fiber fineness of 0.01 to 3 deniers and a basis weight of 15 g/m² to 80 g/m² is employed as said face material.
(2) The process for producing a laminate of a phenolic-resin foam according to the above (1), wherein the nonwoven fabric of synthetic fibers is a polyester long-fiber nonwoven fabric or polypropylene long-fiber nonwoven fabric fabricated by a spun bonding method.
(3) The process for producing a laminate of a phenolic resin foam according to the above (1), wherein the expandable resin composition has a density of 0.3 g/cm³ or less.

one of the largest differences between the conventional techniques and the technique of the present invention is that as a face material for a phenolic resin foam, use of a nonwoven fabric of synthetic fibers having a fiber fineness of at least 6.5 to 7.5 deniers (26 to 30 micron in the case of polyester fibers) had merely been investigated in the conventional techniques, while a nonwoven fabric of synthetic fibers having a fiber fineness of 0.01 to 3 deniers and a basis weight (weight per unit area) of 15 g/m² to 80 g/m² is used in the present invention.

A first role of the elements of the present invention which differs from that of the conventional technique is to bring about a large improvement in the resistance of a face material against the oozing of an expandable phenolic resin, thereby providing a foam laminate which comprises a nonwoven fabric of synthetic fibers having a smaller basis weight than the conventional nonwoven fabric, is free from discoloration-induced spots, and is excellent in product quality. A second role thereof is to improve the adhesion strength of the face material with the phenolic resin foam, thereby simultaneously attaining two properties, that is, excellent product quality and high adhesion strength of the face material with the phenolic resin foam.

### Brief Description of the Drawings

FIG. 1 is a graph illustrating a relationship between the fiber fineness and basis weight of a nonwoven fabric and evaluation of oozing resistance.
FIG. 2 is a graph illustrating a relationship between the fiber fineness and basis weight of a nonwoven fabric and adhesion strength of the face material with the core material.
FIG. 3(a) is a schematic view illustrating a construction example of a foam laminate prepared according to the present invention, FIG. 3(b) is a cross-sectional view taken along a line A-A' of FIG. 3(a), FIG. 3(c) is a cross-sectional view taken along a line B-B' of FIG. 3(a), and FIG. 3(d) is a cross-sectional view illustrating one example of a structure having a face material at both ends of the laminate protruding from the core material.
FIG. 4(A) is a schematic view illustrating another construction example of a foam laminate prepared according to the present invention, FIG. 4(b) is a cross-sectional view taken along a line A-A' of FIG. 4(a), and FIG. 4(c) is a cross-sectional view taken along a line B-B' of FIG. 4(a)

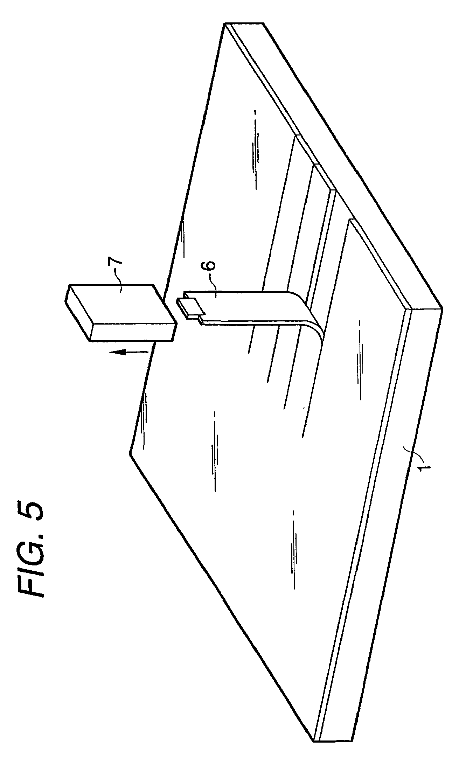

FIG. 5 is a schematic view illustrating a method of measuring the adhesion strength of a face material.

In the drawing, the numeral references are as follows: 1: foam laminate, 2: notch, 3: supporting frame, 4: phenol resin foam, 5: cutout, 6: nonwoven fabric of synthetic fibers, and 7: force gauge

### Best Modes for Carrying Out the Invention

The present invention is described in more detail.

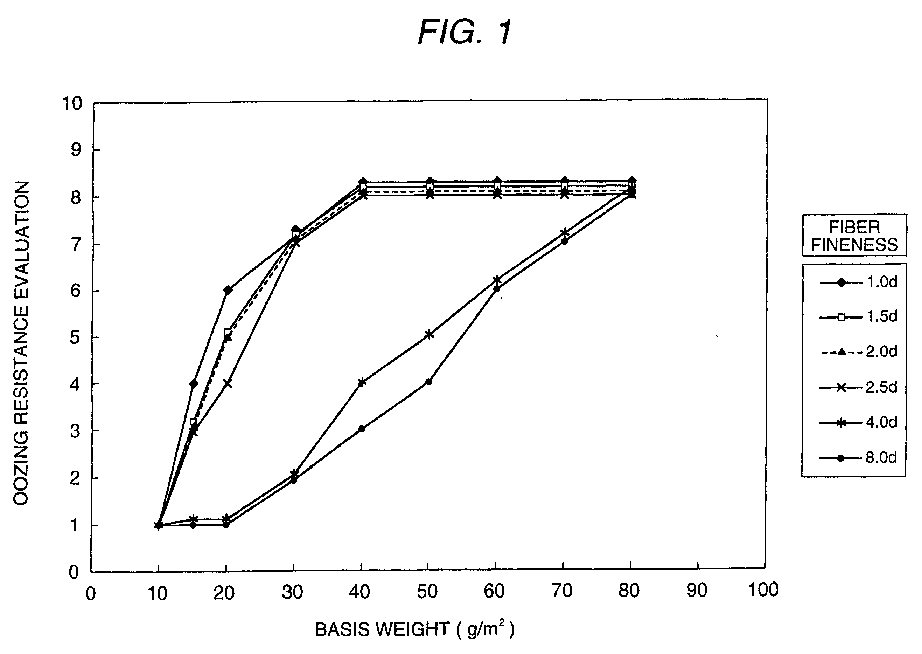

FIG. 1 shows drastic improving effects of the resistance against oozing of an expandable phenolic resin brought by a nonwoven fabric of synthetic fibers (polyester fibers) having a low fiber fineness. The oozing resistance in FIG. 1 was evaluated in accordance with the standards which are described below. With 8 as the maximum value, the larger the value, the better oozing resistance, that is, the less the oozing of the phenolic resin to the outside surface of the face material.

It can be recognized from FIG. 1 that in the relationship between the fiber fineness and oozing resistance, oozing resistance shows a drastic improvement when the fiber fineness decreases from 4 deniers to 2.5 deniers. Specifically, at a basis weight of 15 g/m², a nonwoven fabric of synthetic fibers having a fiber fineness of 2.5 deniers or less exhibits oozing resistance of 3 or greater in the evaluation of oozing resistance. A nonwoven fabric having a fiber fineness of 4 deniers or greater, on the other hand, exhibited oozing resistance evaluation of 1 at the basis weight of 20 g/m² or less. Owing to severe oozing of the uncured expandable phenolic resin, the oozed phenolic resin adhered to the belt of a conveyer, thereby preventing continuous production.

In order to satisfy the oozing resistance evaluation of 7 which is considered to be an excellent level as a product, a nonwoven fabric having a fiber fineness of 4 deniers or greater needs a basis weight of about 70 g/m². On the other hand, for a nonwoven fabric having a fiber fineness of 2.5 deniers or less, a basis weight of 30 g/m² is sufficient. This indicates that the use thereof for a laminate of a phenolic resin foam is economically excellent.

The face material is required not to ooze an expandable phenolic resin (required to have resistance against oozing), because when the uncured expandable phenolic resin which has been continuously discharged oozes to the outside of the face material, it adheres to the belt portion of double conveyers, causing adhesion of a continuous laminate to the belt, thereby preventing continuous production. Even if the oozing of the expandable phenolic resin from the face material is not so remarkable as to cause a production trouble, the oozed resin remains as a red trace after curing of the laminate, thus deteriorating the product quality.

When a nonwoven fabric of synthetic fibers was employed as a face material in the conventional technique, the distance between adjacent fibers was not dense so that the uncured expandable phenolic resin essentially tended to ooze out. It was therefore necessary to use a nonwoven fabric of synthetic fibers having a large basis weight (weight per unit area) when oozing resistance was necessary.

Even if the oozing of the phenolic resin to the outside surface of the nonwoven fabric was prevented by increasing the basis, weight of the nonwoven fabric to a sufficient level, another drawback, such as lowering in the adhesion strength between the face material and phenolic resin foam, occurred.

In addition, the cost of the nonwoven fabric increases in proportion to the basis weight so that in the conventional technique, a nonwoven fabric of synthetic fibers satisfying the oozing resistance inevitably became expensive and therefore uneconomical.

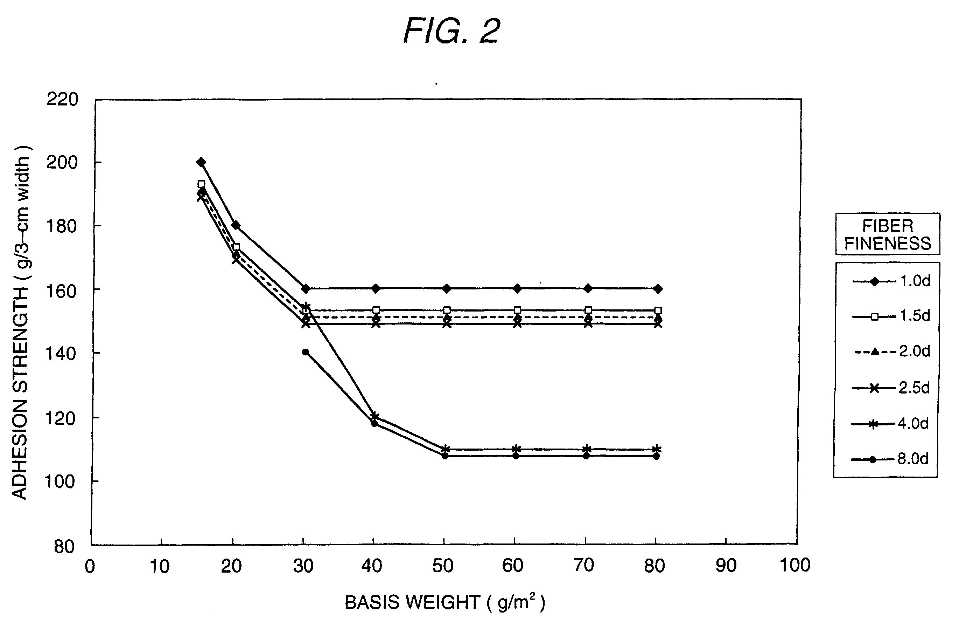

FIG. 2 shows an influence of the fiber fineness and basis weight of a nonwoven fabric of synthetic fibers (polyester fibers) on the adhesion strength between a phenolic resin foam and the nonwoven fabric.

FIG. 2 illustrates the second role of the element of the present invention, in other words, the effects of the use of a nonwoven fabric of synthetic fibers having a small basis weight and fiber fineness for improving the adhesion strength between the nonwoven fabric and the phenolic resin foam. As is seen from FIG. 2, when a nonwoven fabric having a fiber fineness of 4 deniers or greater is used, the adhesion strength with the phenolic resin foam is on a satisfactory level of about 140 g/3 cm width or greater at a basis weight of 30 g/m² or less, while the adhesion strength lowers and becomes insufficient at a basis weight of 40 g/m² or greater.

A slight lowering in the adhesion strength is observed with an increase in the basis weight from 15 g/m² to 30 g/m² when a nonwoven fabric having a fiber fineness of 2.5 deniers or less is employed. The lowering is not so large enough to cause a practical hindrance. The sufficient strength is maintained without a deterioration in adhesion strength even at a basis weight greater than 30 g/m².

In order to attain sufficient adhesion strength by using a nonwoven fabric having a fiber fineness of 4 deniers or greater, the nonwoven fabric must have a smaller basis weight, which however provides a face material having insufficient oozing resistance. In this case, oozing of a phenolic resin to the outside surface occurred and the laminate thus obtained was not excellent in quality of its appearance. Thus, it was impossible to satisfy adhesion strength and oozing resistance simultaneously. On the other hand, the use of the nonwoven fabric of the present invention having.a fiber fineness of 0.01 to 3 deniers makes it possible to satisfy both the oozing resistance of the nonwoven fabric and improvement of adhesion strength. This is possible because lowering in the adhesion strength is markedly slight even if the basis weight of the nonwoven fabric becomes large.

As described above, from the viewpoints of oozing resistance and adhesion, the nonwoven fabric of synthetic fibers in the present invention must have a fiber fineness of 0.01 to 3 deniers, preferably about 2.5 deniers or less. Fiber fineness less than 0.01 denier is not preferred because the production step of such a nonwoven fabric becomes markedly complex. Accordingly in the present invention, the nonwoven fabric of synthetic fibers has a fiber fineness not less than 0.01 denier but not greater than 3 deniers, more preferably not less than 0.01 denier but not greater than 2.5 deniers.

In the present invention, the nonwoven fabric of synthetic fibers has a basis weight within a range of from 15 g/m² to 80 g/m². Basis weights less than 15 g/m³ are not preferred, because the oozing resistance becomes inferior at such a basis weight. A nonwoven fabric becomes expensive when its basis weight exceeds 80 g/m² so that such a basis weight is not preferred from the economical viewpoint.

The nonwoven fabric of synthetic fibers usable in the present invention is made of a material such as polyester, polypropylene or polyamine and no particular limitation is imposed on the nature of it. From the viewpoint of physical properties, a nonwoven fabric made of polyester or polypropylene is preferably employed.

The nonwoven fabric is classified into some kinds by its fabrication method. It is generally classified, by its fiber-to-fiber adhering method, into wet type, adhesive type (chemical bond), needle punch type, stitch bond type, thermal bond type, spun lace type, melt blown type and spun bond type. Among them, a spun-bonded nonwoven fabric is preferably employed in the present invention, because it can be mass produced by series production starting from web formation from a molten and stretched yarn to thermal bonding, the use of it is economical owing to a solventless and therefore simple production process without dipping in an adhesive, and it has, due to the continuous long fibers forming it, high-level physical properties (ex. tear strength) in spite of having a small basis weight.

In the spun bond method, a molten polymer is extruded from a spinneret having many fine holes, and a number of the resulting filaments are cooled, stretched and taken off to collect them on a net, whereby a web is formed. At this stage, one of the most important points in the production technique is how to form a uniform web by splitting the filament. Splitting techniques such as splitting, after taking-off, by air stream diffusion by an air stream diffuser, splitting by corona charge, more specifically, by introducing a filament group into the corona discharge field, thereby electrifying it, and splitting by frictional electrification by electrostatically charging a filament group by causing friction between the filament group with a metal wall.

In the spun bond method, a fiber fineness is determined at the melt spinning stage. Factors determining this fiber fineness include the diameter of each hole of a spinneret, taking-off ratio, cooling rate and spinning properties peculiar to the raw material polymer and also balance with splitting properties of the filament. A reduction of the fiber fineness without lowering melt extrusion productivity usually deteriorates melt spinning stability and at the same time, lowers splitting properties of fibers. Accordingly, there exists a proper range for the economically available fiber fineness.

The phenolic resin laminate foam according to the present invention can be prepared preferably by a laminating method, more specifically, by mixing a surfactant, a foaming agent and a catalyst with a phenolic resin, continuously discharging the resulting mixture as an expandable composition onto a running face material, covering thus discharged composition with another face material and then completing the expansion and curing of it. In this method, the face materials are adhered to the foam by the adhesive force of the phenolic resin itself so that an adhesive is not necessary. Among various laminating methods, that adopting a froth method for continuous discharging of an expandable composition is more preferred. The expandable composition is usually discharged in the liquid form from a nozzle, while the composition is discharged in the froth already expanded to some extent in the froth method, which is presumed to have effects for preventing oozing of the uncured expandable composition from the face material.

As a preferred range of the expanded state of the expandable composition upon discharging from the nozzle, it (stock solution) has a density of 0.3 g/cm³ or less, more preferably 0.2 g/cm³ or less from the viewpoint of controlling the oozing from the face material. As the surfactant, a nonionic surfactant is usually employed.

The phenolic resin employed in the present invention is a resol phenolic resin, which can be obtained by reacting starting materials, that is, phenol and formaldehyde, in the presence of a basic catalyst. As the resol phenolic resin usable in the present invention, those which are excellent in rupture resistance upon combustion of the product, markedly high closed cell properties and reduced in time-dependent deterioration of heat insulation properties are preferred. For example, those as disclosed in U.S. Patent No. 4,882,364 comprising, as a modifier, a substance selected from the group consisting of urea, dicyandiamide and melamine. For example, employed are silicone surfactants such as polydimethyl siloxane, the block copolymer of ethylene oxide and propylene oxide, condensates of an alkylene oxide with an alkyl phenol such as nonyl phenol or dodecyl phenol, condensates between an alkylene oxide and castor oil, and fatty acid esters such as polyoxyethylene fatty acid ester. As a preferred formulation example of the expandable phenolic resin composition to be used in the present invention, the surfactant is added in an amount of 0.5 part by weight to 10 parts by weight, preferably 1 part by weight to 5 parts by weight, each based on 100 parts by weight of the raw material phenolic resin. At the amount of the surfactant less than 0.5 part by weight, it does not exhibit sufficient effects and a closed cell ratio is low, causing problems such as deteriorated mechanical strength. On the other hand, amounts of the surfactant exceeding 10 parts by weight are not economical, because heightening of its effects is not in proportion to an increase in the amount and in addition, at such an amount, softening of the expanded product occurs, thereby deteriorating its mechanical strength. Amounts outside the above-described range are therefore not preferred. Examples of the foaming agent include HFCs such as difluoromethane (HFC32), 1,1,1,2-tetrafluoroethane (HFC134a) and 1,1-difluoroethane (HFC152a), HCFCs such as 1-chloro-1,1-difluoroethane (HCFC142b) and hydrocarbons such as butane, normal-pentane, cyclopentane and isopentane. As the catalyst, acid compounds such as inorganic acid and organic acid are employed, of which aromatic sulfonic acids such as toluenesulfonic acid, xylene sulfonic acid and phenolic sulfonic acid are preferably employed. As a curing assistant, resorcinol, cresol, o-methylol, phenol or p-methylol phenol can be added. Moreover, the curing catalyst or assistant can be used in the diluted form with a solvent such as diethylene glycol.

In the expandable phenolic resin composition to be used in the present invention, the above-described catalyst is incorporated in an amount of 3 to 40 parts, preferably 5 to 30 parts by weight, based on 100 parts by weight of the raw material phenolic resin. When the amount of the catalyst is less than 3 parts by weight, the resulting foam is not cured sufficiently and a closed cell ratio and mechanical strength become inferior. Amounts of the catalyst exceeding 40 parts by weight, on the other hand, deteriorate the physical properties of the resulting foam or increase the acidity of the foam product, thereby causing such a problem as corrosion of a metal member including a nail when it is used as a building material. Thus, amounts outside the above range are not preferred.

Since oozing resistance is improved in the present invention, a resol phenolic resin having a low viscosity (for example, viscosity after dehydration ranging from 5,000 to 40,000 cP) can be used as a raw material resin.

The phenolic foam of the present invention can also be prepared by block foaming or foaming-in-place methods. The term "block foaming" as used herein means a method of weighing, mixing and discharging an expandable resin composition comprising a phenolic resin, surfactant, foaming agent and catalyst in a foaming machine, thereby expanding it as in the form of a block or a continued white bread. A conveyer for urethane foam can be employed. The term "foaming-in-place" as used herein means a method usually and frequently employed for the production of a sandwich panel by using a multiple daylight press. The sandwich panel is usually produced by an open-mold system, more specifically, by completing discharge of an expandable resin composition without a lid (front surface material), covering the composition with the lid, inserting the thus-covered composition into a press, and then heating it to cause foaming and curing.

The foam laminate prepared according to the present invention is very useful as a heat insulating material filled inside of a building such as wall of a common house, a heat insulating material of a refrigerator or a heat insulating material of a refrigerator of a refrigerated vehicle.

The foam laminate prepared according to the present invention is useful in a so-called split liner technique", particularly useful as a heat insulating material employed in the method wherein a laminate of a phenolic resin foam which has a notch for width-wisely bisecting the face material and phenolic resin foam from the front surface toward the back surface of the foam laminate is inserted into a space of a ladder-like supporting frame which has a size smaller than the size of the laminate in a direction perpendicular to the notched plane, to fit each other. The "split liner technique" is suitable for effective exhibition of heat insulating properties of the phenolic foam, because it does not permit formation of any space between the foam and supporting frames, thereby preventing a lowering in the heat insulating properties, which will otherwise occur by the existence of a space. This method is also accompanied with the advantage that fixing of the foam with a nail is not necessary, leading to simplification and efficiency increase of the work.

The "split liner technique" is usually accompanied with the problem that the laminate happens to jump out to another side from the supporting frame upon inserting and fitting the foam laminate between supporting frames or it falls off after insertion. With a view to overcoming such a problem, the laminate preferably has a cutout on the back surface along the short-side direction of the laminate or the laminate has a large projection from the core material at both ends of the face material. In this case, it is preferred to dispose a cutout to form a shiplap in accordance with the cutout of the laminate or projection of the face material.

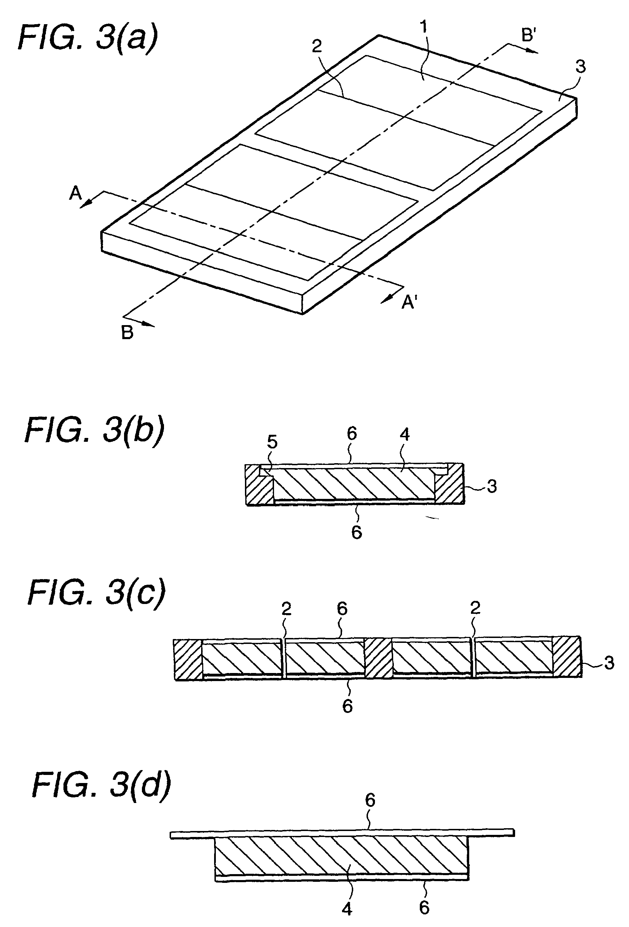

The term "short-side direction of the laminate" in the above description means a direction along B-B' in FIG. 3(a), that is, a direction perpendicular to the notch which bisects the width-wise direction of the laminate. The term "a large projection from the core material at both ends of the face material" means a structure wherein the face material of the laminate, at both ends thereof, protrudes from the core material in the direction perpendicular to the notch which bisects the widthwise direction of the laminate. The term "to dispose a cutout to form a shiplap according to the cutout of the laminate or projection of the face material" means, as illustrated in FIG. 3(b), to dispose a cutout structure, at the supporting frame facing the cutout of the laminate or projection of the face material, in-accordance with the cutout of the laminate or projection of the face material.

### Examples

The present invention will be described in greater detail with reference to the following Examples and Comparative Examples.

The measuring methods and evaluation methods employed in the Examples and Comparative Examples are as follows:
(1) Density measuring method of expandable composition
   The volume of an expandable composition is measured by collecting it from a nozzle by using a graduated cylinder and then adjusting it to a proper shape by using a rod-like jig equipped, at the point thereof, with a flat net. At the same time, the weight of the expandable composition is determined by measuring the weight of the graduated cylinder and subtracting the tare therefrom. The weight of the expandable composition is divided by the volume of it, whereby the density of the expandable composition is determined. The collection of the expandable composition was carried out for 5 seconds and measurement of the volume and weight was carried out 10 seconds after the completion of the collection.
   With regards to the foam laminate obtained, oozing resistance and adhesion strength of the face material with the phenolic resin foam were evaluated. Evaluation of oozing resistance was carried out for 30 foamed laminates based on 8-stage standards which are described below.
(2) Measuring method of fiber fineness
   The fiber fineness was determined by taking a 500-times enlarged photograph of the nonwoven fabric by a scanning electron microscope, measuring the diameter of each of 10 fibers selected from lower focus depth (near to the surface in the photograph) and calculating the average of them. Measurement was carried out at an accelerating voltage of 20 kV by using a scanning electron microscope "S-800" produced by Hitachi Ltd. The nonwoven fabric was pretreated by gold sputtering under the current conditions of 15 mA for 3 minutes.
(3) Measuring method of the basis weight of nonwoven fabric
   Measurement was carried out in accordance with the "mass per unit area" of "Testing method for general nonwoven fabric of long fibers" specified in JIS L 1906.
(4) Evaluation of oozing resistance
   The evaluation of oozing resistance was carried out visually using 20 boards, each 60 cm wide and 120 cm long, produced by test equipment. They were evaluated based on the following 1 to 8 ranking:
   8: Oozing to the outside surface of the phenolic resin is not observed at all.
   7: Oozing to the outside surface rarely happens and small discoloration-induced spots (having a diameter not greater than 5 cm) are observed. The number of the spots is not greater than 0.2 per board.
   6: Only small discoloration-induced spots are observed, but the number is not greater than 1.0 per board.
   5: Small discoloration-induced spots are observed on most of the boards. As well as small discoloration-induced spots, large ones (discoloration range of about 30 cm in diameter) are observed (the number is not greater than 1.0 per board).
   4: Large discoloration-induced spots are observed clearly (the number is at least 1.0 per board) and the discoloration degree becomes markedly apparent.
   3: The region of the discoloration-induced spots widens further but discoloration is not observed all over the board.
   2: Discoloration-induced spots are observed all over the board and they ware observed as continuous, mottle spots.
   1: Oozing of the uncured expandable phenolic resin occurs severely and causes a trouble such as adhesion of the oozed phenolic resin to the belt of a conveyer.

   The oozing resistance was evaluated in accordance with the following standards by using the above-described 8-stage ranking.
   ⊚: excellent in oozing resistance (8 or 7 in the 8-stage ranking)
   ○: superior in oozing resistance (6 or 5 in the 8-stage ranking)
   Δ: inferior in oozing resistance (4 or 3 in the 8-stage ranking)
   ×: markedly inferior in oozing resistance (2 or 1 in the 8-stage ranking)
(5) Measurement and evaluation of adhesion strength of face material
   The adhesion strength was measured in the following procedure. First, 6 rectangular notches of 3 cm in the widthwise direction and 30 cm in the longer direction were disposed at the center of the end portion of a foamed laminate of 60 cm wide and 120 cm long. After about 3 cm of the rectangular notch was peeled at the end thereof, it was grasped with a paper clip and connected with a force gauge. Peeling was conducted at a rate of 1 cm/sec at an angle between the face material and core material maintained at 90 degree. The maximum value at that time was recorded. Among the values measured for 12 positions on the front and back sides of the foamed laminate, the values of 10 positions except the maximum and minimum values were used for calculation of an average. The resulting average is designated as adhesion strength (g/3cm in width) between the face material and core material of the foamed laminate. As the force gauge, that having the maximum load of 500 g and the minimum scale of 0.1 g was employed. The value obtained by counting fractions of .5 and over as a unit and cutting away the rest was used as a measured value. As the adhesion strength, the average was obtained from 5 foamed laminates and then fractions of .5 and over were counted as a unit and the rest was cut away.
   The adhesion strength thus obtained was evaluated in accordance with the following standards.
   ⊚: excellent in adhesion strength (adhesion strength of at least 170 g/3 cm in width)
   ○: superior in adhesion strength (adhesion strength of at least 150 g/3 cm in width but less than 170 g/3 cm in width)
   Δ: inferior in adhesion strength (adhesion strength of at least 120 g/3 cm in width but less than 150 g/3 cm in width)
   ×: markedly inferior in adhesion strength (adhesion strength less than 120 g/3 cm in width)
(6) Synthetic evaluation
   ○: excellent as a foamed laminate
   Δ: satisfactory as a foamed laminate
   ×: inferior as a foamed laminate

### Examples 1 to 32 and Comparative Examples 1 to 22

In each of Examples and Comparative Examples, a nonwoven fabric having a basis weight of each of 10, 15, 20, 30, 40, 50, 60, 70 and 80 g/m² was obtained by a spun-bonded nonwoven fabric manufacturing apparatus by using a polyethylene terephthalate resin as a raw material and adjusting spinning conditions to provide a fiber fineness of 1.0 denier and also adjusting web forming conditions. By adjusting spinning conditions and web forming conditions similarly, a nonwoven fabric having a basis weight of 10, 15, 20, 30, 40, 50, 60, 70 and 80 g/m² was prepared from filaments having a fiber fineness of 1, 5, 2.0, 2.5, 4.0 and 8.0 deniers, respectively.

As a phenolic resin, a resol phenolic resin was synthesized in a similar manner to that disclosed in Example 1 of U.S. Patent No. 5,407,963 and after adjusting its water content, a surfactant was added.

The resulting phenolic resin, foaming agent and acid catalyst were mixed in a mixer. The resulting mixture was continuously discharged onto each of the above-described nonwoven fabrics of synthetic fibers serving as a face material which was running, followed by covering with the same nonwoven fabric as a face material, whereby a continuous laminate was obtained. The resulting continuous laminate was sandwiched and allowed to pass between double conveyers set at a predetermined temperature, followed by foaming and curing, whereby a laminate of a phenolic resin foam of about 27 cm thick was obtained. The foamed laminate was cut into a piece of about 120 cm long and then heated at 85°C for 3 hours, whereby curing was completed. The fiber fineness and basis weight of the face material are shown as test conditions in Tables 1 to 3. As the foaming agent and acid catalyst, isobutane and a mixture of organic toluenesulfonic acid, divalent phenol and diluent as disclosed in JP-A-63-10642 (The term "JP-A" used herein means an unexamined published Japanese patent application") were employed, respectively.

The measurement of the density of the expandable composition continuously discharged from the mixer through a nozzle resulted in 0.3 g/cm³.

In Tables 1 to 3, test conditions, evaluation results of oozing resistance and results of adhesion strength between a face material and core material are shown collectively.

The test conditions and evaluation results of oozing resistance in Tables 1 to 3 are illustrated in the graph of FIG. 1, while the results of the bonding strength between the face material and core material are illustrated in the graph of FIG. 2.

**Table 1**

| | Fiber fineness (denier) | Basis weight (g/cm²) | Evaluation results of oozing resistance (8-stage rank) | Adhesion strength of face material (g/3-cm width) | Total evaluation |
|---|---|---|---|---|---|
| Example 1 | 1.0 | 15 | Δ(4) | (200) | Δ |
| Example 2 | 1.0 | 20 | ○(6) | (180) | ○ |
| Example 3 | 1.0 | 30 | ⊚(7) | (160) | ○ |
| Example 4 | 1.0 | 40 | ⊚(8) | (160) | ○ |
| Example 5 | 1.0 | 50 | ⊚(8) | (160) | ○ |
| Example 6 | 1.0 | 60 | ⊚(8) | (160) | ○ |
| Example 7 | 1.0 | 70 | ⊚(8) | (160) | ○ |
| Example 8 | 1.0 | 80 | ⊚(8) | (160) | ○ |
| Example 9 | 1.5 | 15 | Δ(3) | (19) | Δ |
| Example 10 | 1.5 | 20 | ○(5) | (170) | ○ |
| Example 11 | 1,5 | 30 | ⊚(7) | (150) | ○ |
| Example 12 | 1.5 | 40 | ⊚(8) | (150) | ○ |
| Example 13 | 1,5 | 50 | ⊚(8) | (150) | ○ |
| Example 14 | 1.5 | 60 | ⊚(8) | (150) | ○ |
| Example 15 | 1,5 | 70 | ⊚(8) | (150) | ○ |
| Example 16 | 1.5 | 80 | ⊚(8) | (150) | ○ |
| Example 17 | 2.0 | 15 | Δ(3) | (190) | Δ |
| Example 18 | 2.0 | 20 | ○(5) | (170) | ○ |
| Example 19 | 2.0 | 30 | ⊚(7) | (150) | ○ |
| Example 20 | 2.0 | 40 | ⊚(8) | (150) | ○ |
| Example 21 | 2.0 | 50 | ⊚(8) | (150) | ○ |
| Example 22 | 2.0 | 60 | ⊚(8) | (150) | ○ |
| Example 23 | 2.0 | 70 | ⊚(8) | (150) | ○ |
| Example 24 | 2.0 | 80 | ⊚(8) | (150) | ○ |

**Table 2**

| | Fiber fineness (denier) | Basis weight (g/cm²) | Evaluation results of oozing resistance (8-stage rank) | Adhesion strength of face material (g/3-cm width) | Total evaluation |
|---|---|---|---|---|---|
| Example 25 | 2.5 | 15 | Δ(3) | (190) | Δ |
| Example 26 | 2.5 | 20 | Δ(4) | (170) | Δ |
| Example 27 | 2.5 | 30 | ⊚(7) | (150) | ○ |
| Example 28 | 2.5 | 40 | ⊚(8) | (150) | ○ |
| Example 29 | 2.5 | 50 | ⊚(8) | (150) | ○ |
| Example 30 | 2.5 | 60 | ⊚(8) | (150) | ○ |
| Example 31 | 2.5 | 70 | ⊚(8) | (150) | ○ |
| Example 32 | 2.5 | 80 | ⊚(8) | (150) | ○ |
| Comp. Ex.1 | 1.0 | 10 | X(1) | - | X |
| Comp. Ex. 2 | 1.5 | 10 | X(1) | - | X |
| Comp. Ex. 3 | 2.0 | 10 | X(1) | - | X |
| Comp. Ex. 4 | 2.5 | 10 | X(1) | - | X |
| Comp. Ex. 5 | 4.0 | 10 | X(1) | - | X |
| Comp. Ex. 6 | 4.0 | 15 | X(1) | - | X |
| Comp. Ex. 7 | 4.0 | 20 | X(1) | - | X |
| Comp. Ex. 8 | 4.0 | 30 | X(2) | (150) | X |
| Comp. Ex. 9 | 4.0 | 40 | Δ(4) | (120) | X |
| Comp. Ex. 10 | 4.0 | 50 | ○(5) | (110) | X |
| Comp. Ex. 11 | 4.0 | 60 | ○(6) | (110) | X |
| Comp. Ex. 12 | 4.0 | 70 | ⊚(7) | (110) | X |
| Comp. Ex. 13 | 4.0 | 80 | ⊚(8) | (110) | X |

**Table 3**

| | Fiber fineness (denier) | Basis weight (g/cm²) | Evaluation results of oozing resistance (8-stage rank) | Adhesion strength of face material (g/3-cm width) | Total evaluation |
|---|---|---|---|---|---|
| Comp. Ex. 14 | 8.0 | 10 | X (1) | - | X |
| Comp. Ex. 15 | 8.0 | 15 | X (1) | - | X |
| Comp. Ex. 16 | 8.0 | 20 | X (1) | - | X |
| Comp. Ex. 17 | 8.0 | 30 | X(2) | (140) | X |
| Comp. Ex.18 | 8.0 | 40 | Δ(3) | (120) | X |
| Comp. Ex. 19 | 8.0 | 50 | Δ(4) | (110) | X |
| Comp. Ex. 20 | 8.0 | 60 | ○(6) | (110) | X |
| Comp. Ex. 21 | 8.0 | 70 | ⊚(7) | (110) | X |
| Comp. Ex. 22 | 8.0 | 80 | ⊚(8) | (110) | X |
| Comp. Ex. 23 | - | 75 | ⊚(8) | (60) | X |

It is apparent from Tables 1 to 3 and FIGS. 1 and 2 that a nonwoven fabric of synthetic fibers having a fiber fineness ranging from 1 denier to 2.5 deniers satisfies oozing resistance evaluation of 3 or greater at a basis weight of 15 g/m² and oozing resistance evaluation of 7 at a basis weight of 30 g/m². Although the adhesion strength with the core material shows a slight lowering as the oozing resistance of the phenolic resin is improved, it remains at 150 g/3 cm in width at a basis weight of 30 g/m² or greater, which is a satisfactory strength as a laminate.

A nonwoven fabric having a fiber fineness of 4 deniers or greater must have a basis weight of at least 70 g/m² in order to satisfy the oozing resistance evaluation of 7. Use of such a nonwoven fabric is not economical. The adhesion strength with the core material shows a drastic decrease as the basis weight becomes larger from 30 g/m² to 40 g/m². The adhesion strength at the basis weight of 50 g/m² or greater is 110 g/3 cm in width, which is insufficient as the strength of the laminate. At the basis weight not greater than 20 g/m², the adhesion strength with the core material is presumed to be high, but the uncured phenolic resin oozed out remarkably during the production of a laminate, causing a trouble such as adhesion of the thus-oozed phenolic resin to the belt of a conveyer, whereby a uniform laminate worth for measurement and evaluation of the adhesion strength of the face material was not available. The nonwoven fabric without a description about strength in the column of adhesion strength of the face material in Tables 1 to 3 indicates such results.

From the one side toward the opposite side, but not through these sides, of the laminate of a phenolic resin foam obtained in each of Examples 1 to 32, a notch was formed and moreover, the back surface of the laminate was cut out along the short side direction of the laminate, whereby the laminate of a foam was made to have a hinge structure suitable for "split liner technique". As illustrated in FIG. 3, the laminate of a foam was inserted and fitted, in a direction perpendicular to the notched plane, between wooden supporting frames disposed at a distance smaller than the size of the laminate of a foam, whereby a heat insulating structure was obtained. The resulting laminate of a foam having a hinge structure was actualized using an elastic nonwoven fabric of synthetic fibers so that it has excellent applicability. For example, it can be smoothly deformed, adhesion strength between the face material and core material is sufficient, it is free from troubles such as peeling of the face material during use and the laminate of a foam inserted in the frame does not get out or jump out from the supporting frame.

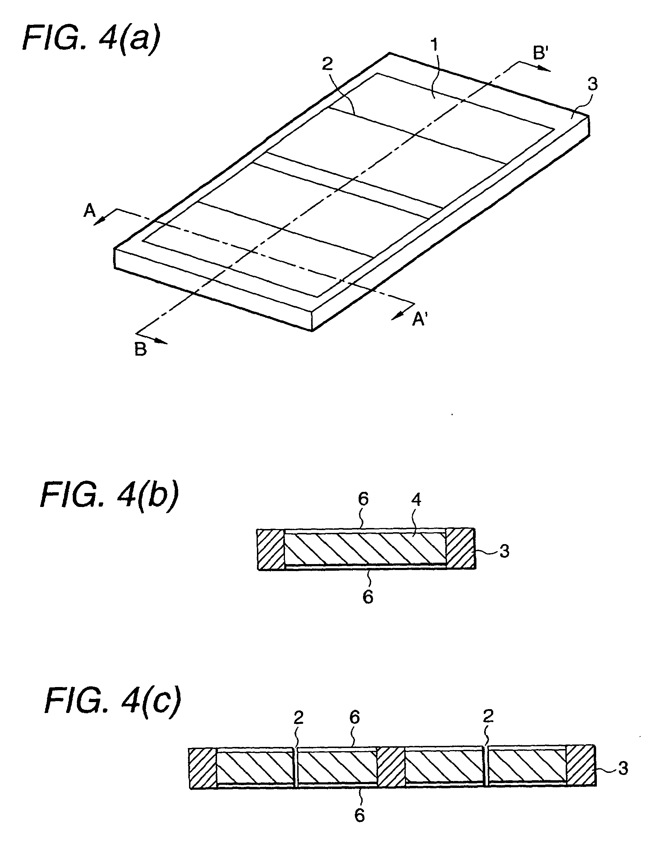

From the one side toward the opposite side, but not through these sides, of the laminate of a phenolic resin foam obtained in each of Examples 1 to 32, a notch was formed, whereby the laminate was made to have a hinge structure suitable for "split liner technique". In this case, a cutout was not disposed on the back surface of the laminate in a short-side direction. As illustrated in FIG. 4, the laminate of a foam was inserted and fitted, in a direction perpendicular to the cutout surface, between wooden supporting frames disposed at a distance smaller than the size of the laminate, whereby a heat insulating structure was obtained. In this case, the laminate was inserted in the supporting frames while the end portion of the laminate was deformed under compression. Insertion into the supporting frames was conducted very smoothly, because the end portion of the laminate tends to be deformed by relatively small compressive force of the supporting frames owing to the phenolic resin foam comprising a relatively fragile core material and in addition, the face material is made of an elastic nonwoven fabric of synthetic fibers. The resulting laminate of a foam having a hinge structure was actualized by an elastic nonwoven fabric of synthetic fibers so that it has excellent applicability. For example, the adhesion strength between the face material and core material is sufficient, it is free from troubles such as peeling of the face material during use and the laminate inserted in the frame does not get out or jump out from the supporting frame.

### Comparative Example 23

In the same manner as in Example 1 except for the use of a kraft paper having a basis weight of 75 g/m² as a face material, a laminate of a phenolic resin foam having a thickness of about 27 mm was obtained. The oozing resistance and adhesion strength of the resulting laminate were evaluated. As a result, oozing to the outside surface of the phenolic resin was not observed at all and its oozing resistance corresponded to evaluation standards of 8. The adhesion strength was about 60 g/3 cm in width and was considerably unsatisfactory.

### Example 33

In the same manner as in Example 1 except for the use of a spun-bonded nonwoven fabric made of polypropylene ("Eltas P03030, spun-bonded nonwoven fabric produced by Asahi Chemical Industry Co., Ltd.) having a fiber fineness of 2.5 deniers and a basis weight of 30 g/m² as a face material, a laminate of a phenolic resin foam having a thickness of about 27 mm was obtained. The oozing resistance and adhesion strength of the resulting laminate were evaluated. As a result, oozing to the outside surface of the phenolic resin was not observed at all and its oozing resistance corresponded to the evaluation standards of 8. The adhesion strength was satisfactory with about 30 g/3 cm in width. The synthetic evaluation was ○.

Owing to the hydrophobic property of propylene fibers themselves, a nonwoven fabric made thereof has a hydrophobic property compared with that made of polyester. This property is presumed to tend to work advantageously for oozing resistance, but a little disadvantageously for adhesion strength.

### Industrial Applicability

The present invention provides, at a low cost, a production process for a laminate comprising a phenolic resin foam as a core material and a nonwoven fabric of synthetic fibers bonded to one or both sides thereof without an adhesive layer. Such a laminate is reduced in discoloration-induced spots which have appeared due to oozing of the phenolic resin, is excellent in product quality, has excellent adhesion strength between the face material and core material, is useful as a thermal insulating material and is particularly suitable for "split liner technique".

## Claims

1. A process for producing a laminate of a phenolic resin foam, which comprises continuously discharging an expandable resin composition comprising a phenolic resin, a surfactant, a foaming agent and a catalyst onto a running face material, covering the resulting composition with a face material, and expanding and curing the composition, wherein a nonwoven fabric of synthetic fibers having a fiber fineness of 0.01 to 3 deniers and a basis weight of 15 g/m² to 80 g/m² is employed as said face material.

2. The process for producing a laminate of a phenolic resin foam according to claim 1, wherein the nonwoven fabric of synthetic fibers is a polyester long-fiber nonwoven fabric or polypropylene long-fiber nonwoven fabric fabricated by a spun bonding method.

3. The process for producing a laminate of a phenolic resin foam according to claim 1, wherein the expandable resin composition has a density of 0.3 g/cm³ or less.

## Patentansprüche

1. Verfahren zur Herstellung eines Laminats aus einem Phenolharzschaum, umfassend das kontinuierliche Abgeben einer expandierbaren Harzzusammensetzung, welche ein Phenolharz, ein oberflächenaktives Mittel, ein Schäumungsmittel und einen Katalysator umfasst, auf ein Laufflächenmaterial, Beschichten der erhaltenen Zusammensetzung mit einem Obermaterial, und Expandieren und Härten der Zusammensetzung, wobei ein Faservlies aus synthetischen Fasern mit einer Faserfeinheit von 0,01 bis 3 Deniers und einem Basisgewicht von 15 g/m² bis 80 g/m² als das Obermaterial eingesetzt wird.

2. Verfahren zur Herstellung eines Laminats aus einem Phenolharzschaum nach Anspruch 1, wobei das Faservlies aus synthetischen Fasern ein Polyester-Langfaser-Faservlies oder ein Polypropylen-Langfaser-Faservlies ist, welches durch ein Spinnvliesverfahren (spun bonding-Verfahren) hergestellt wurde.

3. Verfahren zur Herstellung eines Laminats aus einem Phenolharzschaum nach Anspruch 1, wobei die expandierbare Harzzusammensetzung eine Dichte von 0,3 g/cm³ oder weniger aufweist.

## Revendications

1. Procédé de production d'un stratifié en mousse de résine phénolique, qui comprend le déchargement en continu d'une composition de résine expansible comprenant une résine phénolique, un tensioactif, un agent de moussage et un catalyseur, sur un matériau de façade se déplaçant, et recouvrement de la composition obtenue avec un matériau de façade et étalement et durcissement de la composition, dans lequel un tissus non tissé en fibres synthétiques ayant une finesse de fibre allant de 0,01 à 3 deniers et un poids de base allant de 15 g/m² à 80 g/m² est utilisé en tant que dit matériau de façade.

2. Procédé de production d'un stratifié en mousse de résine phénolique selon la revendication 1, **caractérisé en ce que** le tissus non tissé en fibres synthétiques est un tissus non tissé en longues fibres de polyester ou un tissus non tissé en longues fibres de polypropylène fabriqué par un procédé de filage direct.

3. Procédé de production d'un stratifié en mousse de résine phénolique selon la revendication 1, **caractérisé en ce que** la composition de résine expansible a une masse volumique égale ou inférieure à 0,3 g/cm³.
